# EUROPEAN PATENT SPECIFICATION

(11) **EP 3 578 803 B1**
(45) Date of publication and mention of the grant of the patent: **24.04.2024**
(21) Application number: 18176277.4
(22) Date of filing: 06.06.2018
(51) Int. Cl.: F02N 15/04, F16H 55/08, F02N 11/00, F02N 15/06

(54) **DRIVE PINION FOR A STARTER OF AN INTERNAL COMBUSTION ENGINE**
ANTRIEBSRITZEL FÜR EINEN ANLASSER EINES VERBRENNUNGSMOTORS
PIGNON D'ENTRAINEMENT POUR UN DÉMARREUR D'UN MOTEUR À COMBUSTION INTERNE

(43) Date of publication of application: 11.12.2019
(73) Proprietor: Mahle International GmbH, 70376 Stuttgart (DE)
(72) Inventor: MANFREDA, Dejan, 5214 Kal nad Kanalom (SI)
(74) Representative: BRP Renaud & Partner mbB Rechtsanwälte Patentanwälte Steuerberater

(56) References cited:
- EP-A1- 2 554 831
- WO-A1-2017/203156
- CN-U- 202 017 755
- CN-U- 202 203 363
- CN-U- 202 441 836
- DE-A1-102013 213 084
- DE-A1-102014 217 150
- JP-A- 2003 176 770
- JP-A- 2003 328 912
- JP-A- 2012 041 881
- US-A- 1 329 535
- US-A1- 2013 192 419

## Description

The invention relates to a drive pinion for a starter of an internal combustion engine for engaging in a ring gear of the internal combustion engine in order to drive the latter.

Such drive pinions have a toothing which comprises a plurality of teeth which each have an active flank, a passive flank and a head surface. Here, the teeth extend radially outwards from a root circle of the toothing. Such drive pinions are used in starters for internal combustion engines to rotate the internal combustion engine in order to start the internal combustion engine. Here, for starting, the drive pinion is usually displaced axially in order to engage in the ring gear of the internal combustion engine. A problem with this procedure is that the drive pinion can engage in the ring gear only when it is correctly oriented with the teeth of the ring gear. If, for example, two teeth are situated over one another, the end sides of the drive pinion and of the ring gear each come into contact with one another such that the drive pinion cannot engage in the ring gear.

It is known from the prior art for the teeth of the drive pinion to be provided in part with a bevel on an end side of the drive pinion in order to facilitate the engagement of the drive pinion in the ring gear of the internal combustion engine. The area of the end side is reduced by the bevel, and therefore the probability that two teeth bear on one another by their end sides is reduced. Nevertheless, jamming of the drive pinion with the ring gear of the internal combustion engine can occur, with the result that increased wear is caused.

From DE 10 2014 217 150 A1 a starter pinion for a starting device is known, in which the teeth have an end face which is divided into three adjacent end faces.

From WO 2017/203156 A1 a further drive pinion for a starter of an internal combustion engine is known. The teeth have a reduction in cross-section on one side to facilitate easier engagement with an internal combustion engine sprocket.

From CN 202 017 755 U a drive pinion for a starter motor of an internal combustion engine is known. The teeth of the pinion have a passive flank chamfer and a head chamfer. At the transition between the end face and the active flank, a rounding is provided.

Also from CN 202 203 363 U a drive pinion for a starter motor of an internal combustion engine is known, in which three chamfers are formed on the end faces of the teeth, namely an active plank chamfer, a head chamfer and a passive flank chamfer.

The object on which the present invention is based is to provide an improved or at least different embodiment of a drive pinion which is distinguished in particular by a better engagement behaviour of the drive pinion in the ring gear of the internal combustion engine.

This object is achieved according to the invention by the subject matter of the independent claims. Advantageous developments form the subject matter of the dependent claims.

The invention is founded on the basic idea of the teeth of the drive pinion being provided with an additional bevel on the active flank. According to the invention, bevels are formed on an end side of the drive pinion, wherein a head bevel is formed between the head surface and end side, a passive flank bevel is formed between the passive flank and the end side, and an active flank bevel is formed between the active flank and the end side. As a result a situation in which two pairs of teeth come into contact with one another simultaneously can be avoided. Consequently, the risk of jamming between the drive pinion and the ring gear of the internal combustion engine is reduced, with the result that the wear can be reduced overall.

In the description and the appended claims, an active flank is understood as meaning the flank of the teeth via which the compressive force is transmitted, that is to say the flank which bears on the active tooth flank of the gear mechanism partner if a torque is transmitted.

In the description and the appended claims, a passive flank is understood as meaning the flank of the teeth of the toothing via which no forces are transmitted between the gear mechanism partners in normal operation.

In the description and the appended claims, the terms radial, axial and tangential relate to the axis of rotation of the drive pinion.

According to the invention a tangential bevel width of the active flank bevel increases monotonically from radially inwards to radially outwards. It is hereby ensured that the bevel is larger in the vicinity of the head of the teeth than in the root region. It is precisely in the head region that the reduction of the tooth size at the end face is particularly favourable in order to avoid jamming. In particular, a situation can thus be avoided in which two pairs of teeth simultaneously make contact with one another.

Also according to the invention an axial bevel width of the active flank bevel increases monotonically from radially inwards to radially outwards. In conjunction with the increasing tangential bevel width of the active flank bevel, it is thus possible to ensure that the angle of the active flank bevel is largely constant and a sufficient inclination is still present also in the vicinity of the head of the teeth, with the result that a blocking of the toothing of the drive pinion with the ring gear of the internal combustion engine can be prevented.

An advantageous solution provides that a region without bevel is formed on the active flank between a starting point of the active flank bevel and the root circle. Consequently, the active flank, which is the higher-loaded flank of the toothing, is less greatly weakened, with the result that the service life of the toothing of the drive pinion can be increased. Correspondingly, the starting point of the active flank bevel is situated outside of the root circle, with the result that a region without bevel is formed between the starting point of the active flank bevel and the root circle.

A further advantageous solution provides that a minimum radial bevel width of the head bevel corresponds to between 25% and 35% of a tooth height, wherein the tooth height is defined by a radial distance of the head surface from the root circle. Such a dimensioned head bevel offers an optimum compromise between the service life of the toothing and the facilitation of the engagement of the toothing of the drive pinion in the ring gear of the internal combustion engine.

In the description and the appended claims, the minimum radial bevel width is understood to mean the radial bevel width of the head bevel at the point at which the radial bevel width is minimum.

A further particularly advantageous solution provides that a maximum axial bevel width of the head bevel corresponds to between 45% and 60% of a tooth height, wherein the tooth height is defined by a radial distance of the head surface from the root circle. An axial bevel width in this range of magnitude has proved to be an optimum compromise between the weakening of the teeth by the formation of the head bevel and the improvement, which is positively associated therewith, of the engagement of the toothing of the drive pinion in the ring gear of the internal combustion engine.

In the description and the claims, the maximum bevel width is understood to mean the axial bevel width of the head bevel at the point at which this is maximum.

An expedient variant provides that a transition edge between the end face and the bevels extends rectilinearly in certain portions. Consequently, the bevels can be formed by planar surfaces, which is particularly easy to produce.

A further expedient variant provides that a transition edge between the end face and the bevels extends in a rounded manner. This also allows a curved bevel surface in which the bevel surfaces of the head bevel, of the passive flank bevel and of the active flank bevel merge into one another steplessly and edgelessly, with the result that a shape of the bevel surfaces that is particularly favourable in terms of wear is provided.

A further particularly expedient variant provides that the active bevel flank merges steplessly and edgelessly into the head bevel and/or that the head bevel merges steplessly and edgelessly into the passive flank bevel. These stepless and edgeless transitions between the individual bevels mean that the wear on the counterpart, that is to say the ring gear of the internal combustion engine, can be reduced.

An advantageous possibility provides that a transition edge between the end side and a bevel surface of the active flank bevel extends at an angle to the radial direction which is between 20° and 50°. It is thereby possible to ensure that the active flank bevel is larger in the vicinity of the head of the teeth than in the region of the root circle. This is in particular of advantage for preventing jamming between the drive pinion and the ring gear of the internal combustion engine.

A further advantageous possibility provides that a transition edge between the active flank and a bevel surface of the active flank bevel extends, at a starting point of the active flank bevel, at an angle to the radial direction which is between 20° and 50°. Consequently, the surface of the active flank in the region of the root region is less greatly reduced by the formation of the active flank bevel. Nevertheless, the active flank bevel can occupy a relatively large region on the head region of the tooth that is relevant for jamming and can thus allow an improved engagement characteristic of the drive pinion in the ring gear of the internal combustion engine.

An expedient variant provides that a transition edge extends substantially tangentially between the end side and a bevel surface of the head bevel, with respect to a radially extending centre plane of the respective tooth. This allows a symmetrical design of the head bevel with respect to the active flank and the passive flank, with the result that uniform loading of the teeth is made possible.

A further expedient solution provides that the transition edge between the end side and the bevel surface of the passive flank bevel extends at an angle to the radial direction of +/- 10°.

Furthermore, the invention is founded on the basic idea of providing a starter of an internal combustion engine with such a drive pinion which engages in a ring gear of the internal combustion engine during the starting of the internal combustion engine. Consequently, the advantages of the drive pinion can be applied to the starter, with reference being made in this respect to the above description of said advantages.

Moreover, the invention is founded on the basic idea of equipping an internal combustion engine with such a starter. Consequently, the advantages of the starter and of the drive pinion can be applied to the internal combustion engine, with reference being made in this respect to the above description of said advantages.

Further important features and advantages of the invention will emerge from the subclaims, from the drawings and from the associated description of the figures with reference to the drawings.

Preferred exemplary embodiments of the invention are illustrated in the drawings and are explained in more detail in the description below, with identical reference signs referring to identical or similar or functionally identical components.

In the drawings, each in schematic form,
- Figure 1: shows a perspective view of a drive pinion according to the invention according to a first embodiment,
- Figure 2: shows a perspective view of the drive pinion from Figure 1 at the moment at which it engages in a ring gear of an internal combustion engine,
- Figure 3: shows four views of a tooth of the drive pinion, the central view being of the end side, the two lateral views being of the two flank surfaces and the bottom view being of the head surface,
- Figure 4: shows a perspective view of a drive pinion according to the invention according to a second embodiment of the invention,
- Figure 5: shows an illustration of a tooth of the toothing of the drive pinion from Figure 4, which corresponds to the illustration of Figure 3, and
- Figure 6: shows an illustration, which corresponds to Figure 5, of a tooth of a drive pinion according to the invention according to a third embodiment of the invention.

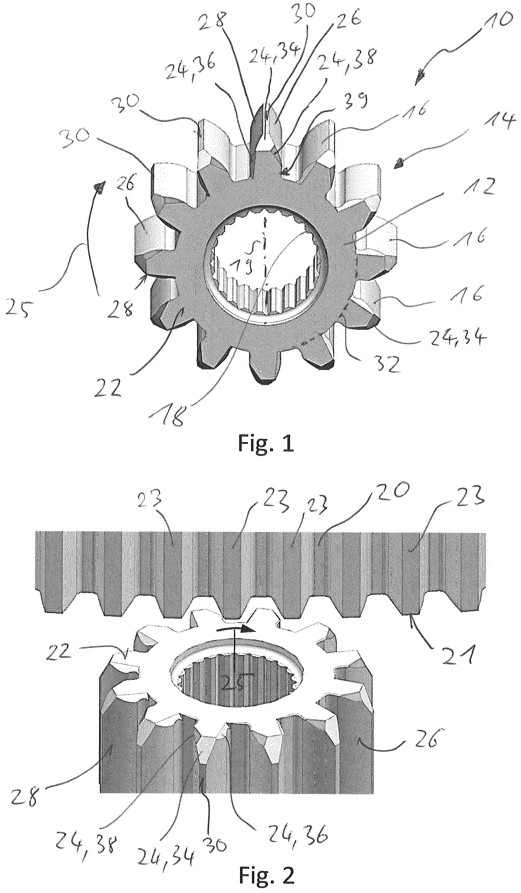

A first embodiment, which is illustrated in Figures 1 to 3, of a drive pinion 10 for a starter of an internal combustion engine comprises an annular base body 12 on which a toothing 14 having a plurality of teeth 16 is formed radially on the outside. An inner surface of the base body 12 has provided thereon a contouring 18 via which the drive pinion 10 can be driven onto a correspondingly contoured shaft. An axis of rotation 19 of the drive pinion 10 is defined by the contouring 18. The terms axial, radial and tangential relate to this axis of rotation 19.

The teeth 16 have an active flank 26 via which the force is transmitted from the drive pinion 10 to a ring gear 20 of the internal combustion engine, and a passive flank 28 which, for reasons of symmetry, is formed in a corresponding manner to the active flank 26. The active flank 26 is therefore situated in a direction of rotation 25, which results upon starting, in front of the passive flank 28. Furthermore, the teeth 16 have a head surface 30 which connects the active flank 26 to the passive flank 28 on a radial outer side of the teeth 16. The teeth 16 extend from an outer surface of the base body 12, which thus forms a root circle 32 of the toothing 14.

Starters of an internal combustion engine customarily operate in such a way that the drive pinion 10 engages in the ring gear 20 of an internal combustion engine only during the starting operation and is released again from the engagement with the ring gear 20 after the starting operation. The process of engagement is critical since end sides of the teeth 16 of the drive pinion 10 can come into contact with end sides 21 of the teeth 23 of the ring gear 20 of the internal combustion engine and can thus prevent engagement or at least can lead to friction and thus to wear.

In order to facilitate the engagement of the drive pinion 10 in the ring gear 20, bevels 24 are formed on the teeth 16 on an end side 22 of the drive pinion 10.

Such a bevel 24 is formed as a head bevel 34 between the end side 22 and the head surface 30. This head bevel 34 reduces the area of the end side 22, with the result that the probability of contact with a tooth of the ring gear 20 of the internal combustion engine is reduced.

A further such bevel 24 is formed as a passive flank bevel 36 between the passive flank 28 and the end side 22. Furthermore, such a bevel 24 is formed as an active flank bevel 38 between the active flank 26 and the end side 22.

Both the passive flank bevel 36 and the active flank bevel 38 further reduce the area of the end side 22, with the result that the risk of contact between the end side 22 and a tooth of the ring gear 20 of the internal combustion engine is reduced. If a tooth of the ring gear 20 comes into contact with one of the flanks, the risk of jamming is reduced since the teeth 16 can slip into the ring gear 20 of the internal combustion engine by virtue of the inclination of the bevels 24.

Here, the active flank bevel 38 is formed obliquely, with the result that a tangential bevel width 40 of the active flank bevel 38 is greatest at the transition into the head bevel 34. Consequently, the reduction of the area of the active flank 26 is more greatly pronounced in the head region of the teeth 16 than in the vicinity of the root circle 32. It is consequently possible to achieve a good compromise between the weakening of the active flank 26 by reducing the flank area and the positive effect during engagement of the drive pinion 10 in the ring gear 20. For the positive effect of facilitated engagement of the drive pinion 10, the reduction of the area of the end side 22 radially further outwards is of greater effect than in the vicinity of the root circle. Therefore, such an active flank bevel 38 which increases monotonically from inside to outside is an optimum compromise between the durability of the teeth or preservation of the flank surface of the active flank 26 and the reduction of the area of the end side 22.

In a corresponding manner, an axial bevel width 42 of the active flank bevel 38 can also increase monotonically from radially inwards to radially outwards. Consequently, starting from the end side 22, the inclination of the active flank bevel 38 can be configured to be sufficiently steep to allow optimum sliding of teeth of the ring gear 20. In order to have still less of an influence on the active flank 26 of the teeth 16, a region 39 can be provided on the teeth 16 which starts from the root circle 32 and in which no bevel 24 is formed between the end side 22 and the active flank 26. The active flank bevel 38 thus starts radially outside of the root circle 32. This means that a starting point 44 of the active flank bevel 38 is situated outside of the root circle 32.

The head bevel 34 is strongly pronounced and has an angle relative to the end side 22 that is greater than 45°. In particular, a minimum radial bevel width 46 of the head bevel 34 is formed in a range between 25% and 35% of the tooth height 48. Here, the tooth height 48 corresponds to a radial distance of the head surface 30 from the root circle 32. It has been found that a head bevel 34 formed with such a size is particularly favourable for the engagement behaviour of the drive pinion 10 in the ring gear 20.

Furthermore, a maximum axial bevel width 50 of the head bevel 34 is formed in a size of 45% to 60% of the tooth height 48. Consequently, a very steep head bevel 34 can be produced which allows easy sliding of the teeth 23 of the ring gear 20 of the internal combustion engine.

The head bevel 34, the passive flank bevel 36 and the active flank bevel 38 each form a transition edge at the transition to the end side 22, wherein a transition edge 52 between the end side 22 and the bevel surface of the active flank bevel 38 extends at an angle to the radial direction 51 which is between 20° and 50°. Consequently, the transition edge 52 is inclined inwards such that, in a radially outer region of the tooth 16, the bevel surface of the active flank bevel is greater than further inwards.

A transition edge 54 between the active flank 26 and a bevel surface of the active flank bevel 38 extends, at the starting point 44 of the active flank bevel 38, at an angle to the radial direction 51 between 20° and 50°. This likewise allows a larger active flank bevel 38 in a radially outer region by comparison with a radially inner internal region.

A transition edge 56 between the end side 22 and a bevel surface of the head bevel 34 extends substantially tangentially with respect to a radially extending centre plane of the respective tooth 16. Consequently, the head bevel 34 is arranged symmetrically to the active flank 26 and the passive flank 28.

A transition edge 58 between the end side 22 and the bevel surface of the passive flank bevel 36 extends at an angle to the radial direction 51 of +/- 10°.

Consequently, the transition edges 52, 56 and 58 on the end side 22 form an asymmetrical quadrangle, with the result that the different requirements between the active flanks 26 and the passive flanks 28 are taken into account.

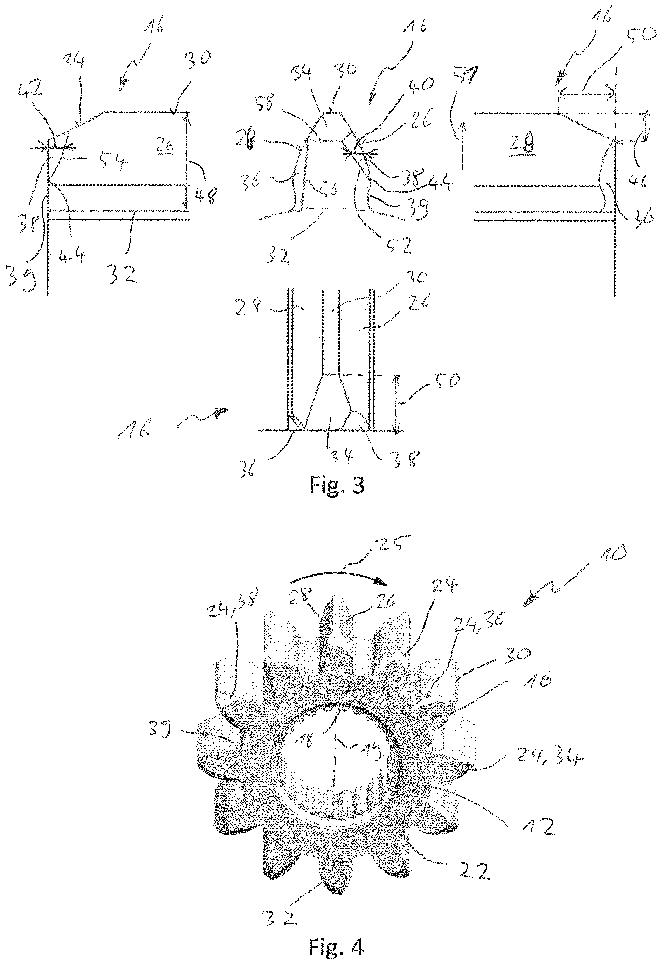

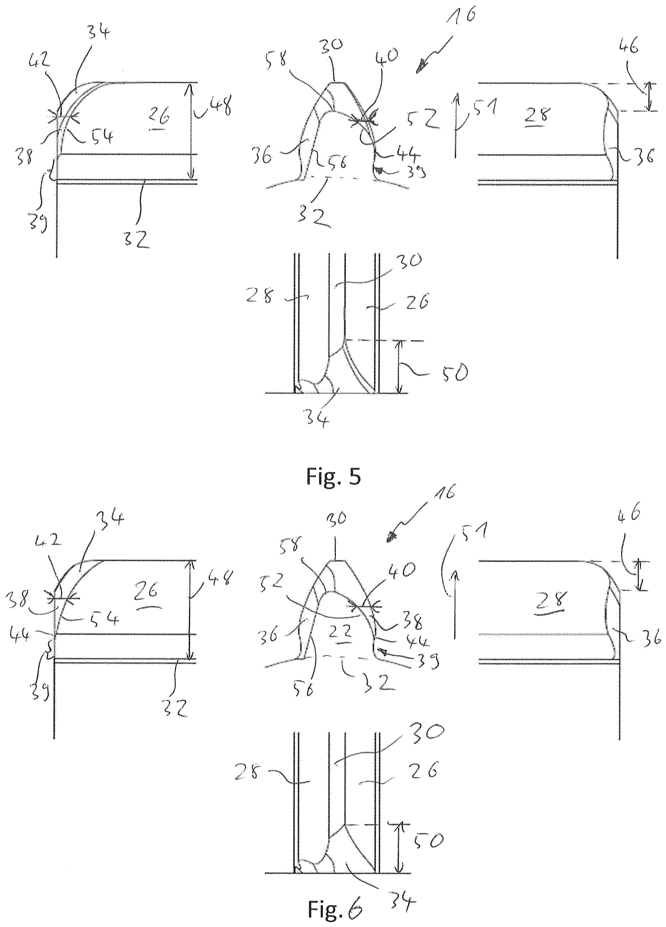

A second embodiment of the drive pinion 10 that is illustrated in Figures 4 and 5 differs from the first embodiment of the drive pinion 10 that is illustrated in Figures 1 to 3 in that the active flank bevel 38, the head bevel 34 and the passive flank bevel 36 merge into one another continuously, that is to say without a step and without an edge. There is thus formed a three-dimensional curved bevel surface which performs the same functions as the three individual bevel surfaces of the active flank bevel 38, the passive flank bevel 36 and the head bevel 34.

The avoidance of edges between the active flank bevel 38, the passive flank bevel 36 and the head bevel 34 additionally makes it possible to reduce the loading of the ring gear 20 on the internal combustion engine.

Moreover, the second embodiment of the drive pinion 10 that is illustrated in Figures 4 and 5 corresponds with the first embodiment of the drive pinion 10 that is illustrated in Figures 1 to 3 in terms of design and function, with reference being made in this respect to the above description thereof.

A third embodiment of the drive pinion 10 that is illustrated in Figure 6 differs from the second embodiment of the drive pinion 10 that is illustrated in Figures 4 and 5 through a slightly modified shape of the rounded-off common flank surface. Otherwise, the third embodiment of the drive pinion 10 that is illustrated in Figure 6 corresponds with the second embodiment of the drive pinion 10 that is illustrated in Figures 4 and 5 in terms of design and function, with reference being made in this respect to the above description thereof.

## Claims

1. Drive pinion (10) for a starter of an internal combustion engine for engaging in a ring gear (20) of the internal combustion engine, comprising a toothing (14) which has a plurality of teeth (16) which each have an active flank (26), a passive flank (28) and a head surface (30),
- wherein the teeth (16) extend radially outwards from a root circle (32) of the toothing (14),
- wherein bevels (24) are formed on an end side (22) of the drive pinion (10),
- wherein a head bevel (34) is formed between the head surface (30) and end side (22),
- wherein a passive flank bevel (36) is formed between the passive flank (28) and the end side (22), and
- wherein an active flank bevel (38) is formed between the active flank (26), the head bevel (34) and the end side (22),
**characterized**
- **in that** a tangential bevel width (40) of the active flank bevel (38) increases monotonically from radially inwards to radially outwards,
- **in that** an axial bevel width (42) of the active flank bevel (38) increases monotonically from radially inwards to radially outwards.

2. Drive pinion according to Claim 1,
**characterized**
**in that** a region (39) without bevel (24) is formed on the active flank (26) between a starting point (44) of the active flank bevel (38) and the root circle (32).

3. Drive pinion according to Claim 1 or 2, **characterized**
**in that** a minimum radial bevel width (46) of the head bevel (34) corresponds to between 25% and 35% of a tooth height (48), wherein the tooth height (48) is defined by a radial distance of the head surface (30) from the root circle (32).

4. Drive pinion according to one of Claims 1 to 3, **characterized**
**in that** a maximum axial bevel width (50) of the head bevel (34) corresponds to between 45% and 60% of a tooth height (48), wherein the tooth height (48) is defined by a radial distance of the head surface (30) from the root circle (32).

5. Drive pinion according to one of Claims 1 to 4, **characterized**
**in that** at least one transition edge (52, 56, 58) between the end face (22) and one of the bevels (24) extends rectilinearly in certain portions, and/or in that at least one transition edge (52, 56, 58) between the end face (22) and the bevels (24) extends in a rounded manner.

6. Drive pinion according to one of Claims 1 to 5, **characterized**
**in that** a transition edge (52) between the end side (22) and a bevel surface of the active flank bevel (38) extends at an angle to a radial direction (51) which is between 20° and 50°.

7. Drive pinion according to one of Claims 1 to 6, **characterized**
**in that** a transition edge (54) between the active flank (26) and a bevel surface of the active flank bevel (38) extends, at a starting point (44) of the active flank bevel (38), at an angle to the radial direction (51) which is between 20° and 50°.

8. Starter of an internal combustion engine having a drive pinion (10) according to one of Claims 1 to 7 which engages in a ring gear (20) of the internal combustion engine during the starting of the internal combustion engine.

9. Internal combustion engine having a starter according to Claim 8.

## Patentansprüche

1. Antriebsritzel (10) für einen Anlasser eines Verbrennungsmotors zum Eingreifen in einen Zahnkranz (20) des Verbrennungsmotors, umfassend eine Verzahnung (14), die eine Vielzahl von Zähnen (16) aufweist, die jeweils eine Wirkflanke (26), eine Passivflanke (28) und eine Kopffläche (30) aufweisen,
- wobei sich die Zähne (16) von einem Fußkreis (32) der Verzahnung (14) radial nach außen erstrecken,
- wobei an einer Stirnseite (22) des Antriebsritzels (10) Fasen (24) ausgebildet sind,
- wobei zwischen der Kopffläche (30) und Stirnseite (22) eine Kopffase (34) ausgebildet ist,
- wobei zwischen der Passivflanke (28) und der Stirnseite (22) eine Passivflankenfase (36) ausgebildet ist und
- wobei zwischen der Wirkflanke (26), der Kopffase (34) und der Stirnseite (22) eine Wirkflankenfase (38) ausgebildet ist,
**dadurch gekennzeichnet,**
- **dass** eine tangentiale Fasenbreite (40) der Wirkflankenfase (38) von radial innen nach radial außen monoton zunimmt,
- **dass** eine axiale Fasenbreite (42) der Wirkflankenfase (38) von radial innen nach radial außen monoton zunimmt.

2. Antriebsritzel nach Anspruch 1,
**dadurch gekennzeichnet,**
**dass** an der Wirkflanke (26) zwischen einem Anfangspunkt (44) der Wirkflankenfase (38) und dem Fußkreis (32) ein Bereich (39) ohne Fase (24) ausgebildet ist.

3. Antriebsritzel nach Anspruch 1 oder 2,
**dadurch gekennzeichnet,**
**dass** eine minimale radiale Fasenbreite (4 6) der Kopffase (34) zwischen 25 % und 35 % einer Zahnhöhe (48) entspricht, wobei die Zahnhöhe (48) durch einen radialen Abstand der Kopffläche (30) von dem Fußkreis (32) definiert ist.

4. Antriebsritzel nach einem der Ansprüche 1 bis 3,
**dadurch gekennzeichnet,**
**dass** eine maximale axiale Fasenbreite (50) der Kopffase (34) zwischen 45 % und 60 % einer Zahnhöhe (48) entspricht, wobei die Zahnhöhe (48) durch einen radialen Abstand der Kopffläche (30) von dem Fußkreis (32) definiert ist.

5. Antriebsritzel nach einem der Ansprüche 1 bis 4,
**dadurch gekennzeichnet,**
**dass** mindestens eine Übergangskante (52, 56, 58) zwischen der Stirnfläche (22) und einer der Fasen (24) abschnittsweise geradlinig verläuft, und/oder
**dass** mindestens eine Übergangskante (52, 56, 58) zwischen der Stirnfläche (22) und den Fasen (24) abgerundet verläuft.

6. Antriebsritzel nach einem der Ansprüche 1 bis 5,
**dadurch gekennzeichnet,**
**dass** eine Übergangskante (52) zwischen der Stirnseite (22) und einer Fasenfläche der Wirkflankenfase (38) in einem Winkel zu einer radialen Richtung (51) verläuft, der zwischen 20° und 50° beträgt.

7. Antriebsritzel nach einem der Ansprüche 1 bis 6,
**dadurch gekennzeichnet,**
**dass** eine Übergangskante (54) zwischen der Wirkflanke (26) und einer Fasenfläche der Wirkflankenfase (38) an einem Anfangspunkt (44) der Wirkflankenfase (38) in einem Winkel zu der radialen Richtung (51) verläuft, der zwischen 20° und 50° beträgt.

8. Anlasser eines Verbrennungsmotors, der ein Antriebsritzel (10) nach einem der Ansprüche 1 bis 7 aufweist, das beim Starten des Verbrennungsmotors in einen Zahnkranz (20) des Verbrennungsmotors eingreift.

9. Verbrennungsmotor, der einen Anlasser nach Anspruch 8 aufweist.

## Revendications

1. Pignon d'entraînement (10) pour un démarreur d'un moteur à combustion interne destiné à s'engrener dans une couronne dentée (20) du moteur à combustion interne, comprenant une denture (14) qui présente une pluralité de dents (16) qui présentent chacune un flanc actif (26), un flanc passif (28) et une surface de tête (30),
- dans lequel les dents (16) s'étendent radialement vers l'extérieur à partir d'un cercle de pied (32) de la denture (14),
- dans lequel des chanfreins (24) sont formés sur un côté d'extrémité (22) du pignon d'entraînement (10),
- dans lequel un chanfrein de tête (34) est formé entre la surface de tête (30) et le côté d'extrémité (22),
- dans lequel un chanfrein de flanc passif (36) est formé entre le flanc passif (28) et le côté d'extrémité (22), et
- dans lequel un chanfrein de flanc actif (38) est formé entre le flanc actif (26), le chanfrein de tête (34) et le côté d'extrémité (22),
**caractérisé**
- **en ce qu'**une largeur de chanfrein tangentielle (40) du chanfrein de flanc actif (38) augmente de façon monotone radialement de l'intérieur vers l'extérieur,
- **en ce qu'**une largeur de chanfrein axial (42) du chanfrein de flanc actif (38) augmente de façon monotone radialement de l'intérieur vers l'extérieur.

2. Pignon d'entraînement selon la revendication 1,
**caractérisé**
**en ce qu'**une zone (39) sans chanfrein (24) est formée sur le flanc actif (26) entre un point de départ (44) du chanfrein de flanc actif (38) et le cercle de pied (32).

3. Pignon d'entraînement selon la revendication 1 ou 2,
**caractérisé**
**en ce qu'**une largeur de chanfrein radial minimale (4 à 6) du chanfrein de tête (34) correspond à entre 25 % et 35 % d'une hauteur de dent (48), dans lequel la hauteur de dent (48) est définie par une distance radiale de la surface de tête (30) du cercle de pied (32).

4. Pignon d'entraînement selon l'une des revendications 1 à 3,
**caractérisé**
**en ce qu'**une largeur de chanfrein axial maximale (50) du chanfrein de tête (34) correspond à entre 45 % et 60 % d'une hauteur de dent (48), dans lequel la hauteur de dent (48) est définie par une distance radiale de la surface de tête (30) du cercle de pied (32).

5. Pignon d'entraînement selon l'une des revendications 1 à 4,
**caractérisé**
**en ce qu'**au moins un bord de transition (52, 56, 58) entre la face d'extrémité (22) et l'un des chanfreins (24) s'étend de manière rectiligne dans certaines parties, et/ou
**en ce qu'**au moins un bord de transition (52, 56, 58) entre la face d'extrémité (22) et les chanfreins (24) s'étend de manière arrondie.

6. Pignon d'entraînement selon l'une des revendications 1 à 5,
**caractérisé**
**en ce qu'**un bord de transition (52) entre le côté d'extrémité (22) et une surface de chanfrein du chanfrein de flanc actif (38) s'étend selon un angle par rapport à une direction radiale (51) qui est entre 20° et 50°.

7. Pignon d'entraînement selon l'une des revendications 1 à 6,
**caractérisé**
**en ce qu'**un bord de transition (54) entre le flanc actif (26) et une surface de chanfrein du chanfrein de flanc actif (38) s'étend, à un point de départ (44) du chanfrein de flanc actif (38), selon un angle par rapport à la direction radiale (51) qui est entre 20° et 50°.

8. Démarreur d'un moteur à combustion interne présentant un pignon d'entraînement (10) selon l'une des revendications 1 à 7 qui s'engrène dans une couronne dentée (20) du moteur à combustion interne lors du démarrage du moteur à combustion interne.

9. Moteur à combustion interne présentant un démarreur selon la revendication 8.
